# EUROPÄISCHE PATENTSCHRIFT

(11) **EP 3 538 925 B1**
(45) Veröffentlichungstag und Bekanntmachung des Hinweises auf die Patenterteilung: **29.03.2023**
(21) Anmeldenummer: 17791412.4
(22) Anmeldetag: 30.10.2017
(51) Int. Cl.: G01S 17/10, G01S 17/42, G01S 7/491

(54) **LIDARSYSTEM**
LIDAR SYSTEM
SYSTÈME LIDAR

(30) Priorität: 11.11.2016 DE 102016222138
(43) Veröffentlichungstag der Anmeldung: 18.09.2019
(73) Patentinhaber: Robert Bosch GmbH, 70442 Stuttgart (DE)
(72) Erfinder: FERSCH, Thomas, 72764 Reutlingen (DE)
(86) Internationale Anmeldenummer: PCT/EP2017/077814
(87) Internationale Veröffentlichungsnummer: WO 2018/086945

(56) Entgegenhaltungen:
- EP-A2- 2 963 445
- DE-A1-102014 118 055
- US-A- 5 745 437
- US-A1- 2002 167 654
- US-B1- 6 580 497

## Beschreibung

### Stand der Technik

Die vorliegende Erfindung betrifft ein Lidarsystem zum Messen eines Abstandes mittels Laserlicht. Außerdem betrifft die Erfindung ein Verfahren zum Erfassen einer Umgebung durch ein Lidarsystem.

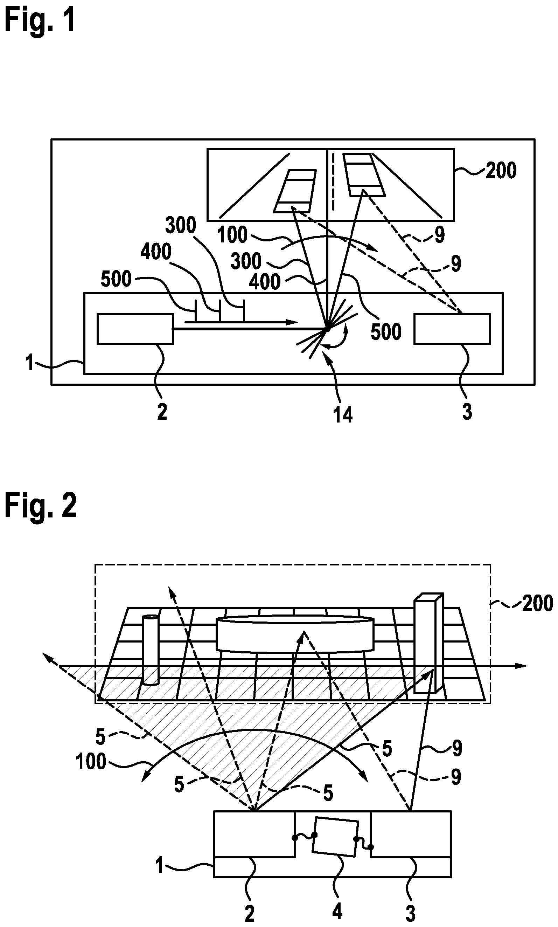

In Fahrzeugen werden oftmals Lidarsensoren verwendet, um eine Umgebung des Fahrzeugs zu vermessen. Dabei werden gepulste Laser mit hoher Spitzenleistung verwendet. Ein derartiges System ist schematisch in Figur 1 dargestellt. Figur 1 zeigt ein Lidarsystem 1 umfassend eine Laserlichtquelle 2 und eine Empfangsvorrichtung 3. Dabei ist vorgesehen, dass über die Laserlichtquelle 2 ein Laserlicht auf eine Umgebung 200 ausgesandt wird, wobei das von der Umgebung 200 reflektierte Laserlicht 9 von der Empfangsvorrichtung 3 empfangbar ist.

Es ist vorgesehen, dass das Laserlicht ausschließlich gepulst ausgesandt wird. So ist beispielsweise in Figur 1 ein erster Puls 300, ein zweiter Puls 400 und ein dritter Puls 500 gezeigt. Außerdem wird das ausgesandte Laserlicht durch eine Ablenkvorrichtung 14 abgelenkt, um eine Scanbewegung 100 zu generieren. Ein solches System hat jedoch die folgenden Nachteile:
- Nach dem Aussenden eines jeden Lichtpulses 300, 400, 500 muss eine gewisse Zeit gewartet werden, um alle eventuellen Reflexionen des ausgesandten Lichtpulses 300, 400, 500 durch die Empfangsvorrichtung 3 zu empfangen. Wird dies nicht beachtet, so können Mehrdeutigkeiten entstehen, die zu falschen Ergebnissen führen können. Daher ist das System 1 langsam und unflexibel.
- Das Lidarsystem 1 kann, wie jedes System, das einzelne kurze Pulse aussendet, sehr leicht gestört werden. Dies kann entweder unbeabsichtigt durch andere Lidarsystem im gleichen Wellenlängenbereich, durch Lkw-Mautbrücken, wie sie beispielsweise an deutschen Autobahnen angebracht sind, oder durch Geschwindigkeitsmessstationen erfolgen. Ebenso ist eine Störung durch einen böswilligen Angriff denkbar. Solche böswilligen Angriffe wurden im Stand der Technik bereits diskutiert.
- Generell muss die Augensicherheit von Systemen, die einen Laser verwenden, für den worst-case-Fall bewertet werden. Bei herkömmlichen Systemen mag ein einzelner, hochenergetischer Lichtpuls die Augensicherheit nicht beeinträchtigen, bei Betrachtung eines worst-case-Falls kann allerdings die Möglichkeit der Kombination der Energie mehrerer Pulse bestehen und zu sehr strikten Limitierungen bei der Sendeleistung der Laserlichtquelle 2 führen. Somit sind bekannte Lidarsysteme 1 auch hierdurch beschränkt.
- Die Erzeugung sehr hoher Spitzenleistungen erfordert sehr hohe Ströme, die nur durch teure Hardware erzeugt werden können. Außerdem entsteht durch hohe Ströme eine umfangreiche Problematik hinsichtlich elektromagnetischer Verträglichkeit.

Die Druckschrift DE 10 2014 118055 A1 offenbart ein Lidarsystem zum Erfassen einer Umgebung mit einer Laserlichtquelle zum Aussenden eines Laserlichts, einer Empfangsvorrichtung zum Empfangen eines von der Umgebung reflektierten Laserlichts und einer Steuerungsvorrichtung zum Ansteuern der Laserlichtquelle, wobei die Steuerungsvorrichtung eingerichtet ist, die Laserlichtquelle zum Aussenden eines kontinuierlichen Lichtstrahls anzusteuern.

### Offenbarung der Erfindung

Das erfindungsgemäße Lidarsystem erlaubt eine schnelle und flexible Erfassung einer Umgebung. Dabei können insbesondere kostengünstige Hardwarekomponenten wie SPAD-Dioden verwendet werden. Auch werden geringere Spitzenleistungen als im Stand der Technik verwendet, um mindestens gleich hohe Detektionswahrscheinlichkeiten zu erreichen. Somit ist das erfindungsgemäße Lidarsystem vorteilhaft hinsichtlich Augensicherheit.

Das erfindungsgemäße Lidarsystem umfasst eine Laserlichtquelle zum Aussenden eines Laserlichts, eine Empfangsvorrichtung zum Empfangen von Laserlicht und eine Steuerungsvorrichtung zum Ansteuern der Laserlichtquelle. Dabei ist vorgesehen, dass das von der Laserlichtquelle ausgesendete Laserlicht von einer Umgebung reflektiert wird, um von der Empfangsvorrichtung empfangen zu werden. Die

Steuerungsvorrichtung ist eingerichtet, die Laserlichtquelle zum Aussenden eines kontinuierlichen Lichtstrahls anzusteuern und den ausgesandten Lichtstrahl kontinuierlich zu modulieren. Auf diese Weise umfasst der Lichtstrahl eine Vielzahl von aufeinanderfolgenden Codes. Durch die Codes ist somit ermöglicht, dass eine zeitliche Zuordnung des Lichtstrahls durchgeführt werden kann. Somit muss nicht wie im Stand der Technik auf einzelne Lichtpulse zurückgegriffen werden, vielmehr kann ein kontinuierlicher Lichtstrahl ausgesandt werden. Dennoch sind die gleichen Möglichkeiten wie im Stand der Technik gegeben, so dass insbesondere Entfernungsmessungen durchführbar sind. Die Entfernungsmessungen lassen sich über die Laufzeit des Laserlichts durchführen. Da wie zuvor beschrieben jedes Laserlicht codiert ist, ist der Zeitpunkt des Aussendens des Laserlichts bekannt. Dies ist insbesondere auch dann möglich, wenn sich mehrere ausgesandte Lichtstrahlen überlagern.

Die Unteransprüche zeigen bevorzugte Weiterbildungen der Erfindung.

Die Codes weisen bevorzugt eine minimale Kreuzkorrelation und/oder eine maximale Orthogonalität auf. Dies bedeutet, dass sich die Codes möglichst unähnlich sind, so dass eine Verwechselung der Codes untereinander ausgeschlossen ist. Insbesondere ist vorgesehen, dass die Codes außerdem mit sich selbst korreliert ein scharfes Maximum mit niedrigen Nebenkeulen aufweisen. Dies wird als optimale Autokorrelation bezeichnet. Auf diese Weise lassen sich die Codes sicher und zuverlässig aus dem reflektierten Laserlichts extrahieren. Somit sind sichere und zuverlässige Entfernungsmessungen ermöglicht.

Bevorzugt ist die Laserlichtquelle ausgebildet, das Laserlicht entlang eines zweidimensionalen Raums auszusenden. Dies bedeutet, dass ein Lichtstrahl unter unterschiedlichen Winkeln aus der Laserlichtquelle ausgesandt werden kann. Der zweidimensionale Raum stellt somit eine Begrenzung des besagten Winkels dar. Durch das Aussenden unter unterschiedlichen Winkel ist insbesondere eine Scanbewegung generierbar. Auf diese Weise kann kontinuierlich ein Abtasten der Umgebung erfolgen, wobei durch die Scanbewegung das Abtasten linienförmig oder flächenförmig erfolgt. Insbesondere ist auf diese Weise ermöglicht, dass eine Scanbewegung mit kontinuierlich ausgesandtem Laserlicht durchgeführt wird, was im Stand der Technik nicht möglich ist. Die Laserlichtquelle kann dazu insbesondere eine Ablenkvorrichtung umfassen, wobei die Ablenkvorrichtung insbesondere durch einen Spiegel realisiert sein kann. Durch Verkippen des Spiegels lassen sich unterschiedliche Winkel realisieren, unter denen das Laserlicht von der Laserlichtquelle ausgesandt wird.

Die Codes werden bevorzugt durch unterschiedliche Folgen eines Aktivierens und Deaktivierens der Laserlichtquelle generiert. Somit wird eine Modulation durch On-Off-Keying erreicht, da durch das Aktivieren und Deaktivieren der Laserlichtquelle ein Bit realisiert werden kann. So kann insbesondere eine logische 1 durch eine aktivierte Laserlichtquelle und eine logische 0 durch eine deaktivierte Laserlichtquelle repräsentiert sein. Durch wiederholtes Aktivieren und Deaktivieren der Laserlichtquelle lässt sich somit ein Code mit grundsätzlich beliebiger Bitlänge generieren.

Bevorzugt beträgt eine Zeitdauer jedes Codes zwischen 0,5 Mikrosekunden und 1,5 Mikrosekunden. Besonders vorteilhaft ist vorgesehen, dass die Zeitdauer 1,0 Mikrosekunden beträgt. Ein Code weist bevorzugt eine Länge von 127 Bit auf. Ein Code mit einer solchen Länge lässt sich vorteilhafterweise optimal in der zuvor beschriebenen Zeitdauer darstellen. Durch die beschriebene Länge und die beschriebene Zeitdauer ist sichergestellt, dass die einzelnen Codes sicher und zuverlässig unterschieden werden können, wenn das reflektierte Laserlicht von der Empfangsvorrichtung erfasst wird. Außerdem ist die oben beschriebene Zeitdauer optimal für die Durchführung von Entfernungsmessungen basierend auf der Laufzeit des Laserlichts, da hier eine zu große Zeitdauer zu unscharfen Messungen führen würde.

Die Codes werden bevorzugt mittels N-Sequenz und/oder Golden Codes und/oder Kasami-Codes und/oder Barker-Codes und/oder Ipatov-Sequenzen bestimmt. Diese Verfahren sind grundsätzlich aus dem Stand der Technik bekannt. Nach jedem dieser Verfahren kann bevorzugt ein Set aus acht verschiedenen Codes erstellt werden, wobei die Codes bevorzugt die zuvor beschriebene Länge von127 Bit aufweisen. Zum Umsetzen dieser Codes in dem kontinuierlichen Lichtstrahl ist die Steuerungsvorrichtung bevorzugt eingerichtet, die Laserlichtquelle analog zu dem Code zu aktivieren und zu deaktivieren. Der kontinuierliche Lichtstrahl wird bevorzugt derart moduliert, dass die Codes, insbesondere die zuvor beschriebenen acht verschiedenen Codes, entweder direkt nacheinander und wiederholt oder mit einer variablen Pause zwischen den einzelnen Codes gesendet werden. Die variablen Pausen können bevorzugt verlängert werden, sollte dies für die elektronische Signalverarbeitung des durch die Empfangsvorrichtung empfangenen reflektierten Laserlichts notwendig sein. Weiterhin können die variablen Pausen verkürzt werden, um somit eine Genauigkeit der Messung zu erhöhen.

Die Empfangsvorrichtung umfasst bevorzugt zumindest eine, insbesondere eine einzelne, Fotodiode und/oder einen Fotodiodenarray. Durch die Fotodiode ist das reflektierte Licht empfangbar. Der Fotodiodenarray erlaubt das Empfangen von großflächig reflektierten Lichtstrahlen, sodass eine sichere und zuverlässige Detektion des ausgesandten Lichts ermöglicht ist.

Bevorzugt ist vorgesehen, dass die Fotodiode und/oder der Fotodiodenarray eine pin-Diode und/oder eine APD-Diode und/oder eine SPAD-Diode umfasst. Unter einer pin-Diode ist eine Diode zu verstehen, die eine p-dotierte und eine n-dotierte Schicht aufweist, wobei sich eine intrinsische Schicht zwischen der p-dotierten Schicht und der n-dotierten Schicht befindet. Unter intrinsischer Schicht ist eine Schicht zu verstehen, die nicht oder lediglich schwach dotiert ist, sodass diese Schicht hauptsächlich eigenleitend ist. Unter einer APD-Diode ist eine Avalanche-Photodiode zu verstehen. Besonders vorteilhaft umfassen die Fotodiode und/oder der Fotodiodenarray zumindest eine SPAD-Diode. Die Verwendung einer solchen Diode wird erst durch die Modulation des kontinuierlichen Lichtstrahls ermöglichte. Dies ist insofern vorteilhaft, als SPAD-Diode sehr kostengünstig herzustellen sind.

In einer bevorzugten Ausführungsform der Erfindung umfasst die Empfangsvorrichtung einen Filter für jeden Code. Dabei ist vorgesehen, dass jeder Filter bei einem Eingangssignal mit dem zugeordneten Code ein maximales Ausgangssignal ausgibt und ansonsten das Eingangssignal unterdrückt. Somit kann anhand der Ausgangssignale jedes der Filter festgestellt werden, welchen Code das durch die Empfangsvorrichtung erfasste Licht aufweist. Somit ist bestimmbar, wann das reflektierte Licht ausgesandt wurde, wodurch eine Entfernungsmessung aufgrund des Laufzeitverfahrens ermöglicht ist. Besonders vorteilhaft ist ermöglicht, dass ein Filter bei einem solchen Eingangssignal ein maximales Ausgangssignal ausgibt, dass zwei bestimmte aufeinanderfolgende Codes aufweist. Auf diese Weise wird eine größere Signalenergie ausgewertet, sodass eine Detektionswahrscheinlichkeit großer Flächen vergrößert ist. Allerdings verringern sich die horizontale, räumliche Auflösung sowie die Genauigkeit der Tiefeninformationen. Somit ist insbesondere vorteilhaft, wenn die oben genannten feinen Filter den zuletzt beschriebenen groben Filtern nachgeschaltet sind, um so eine stufenförmige Detektionen auszuführen.

Bei den Filtern handelt es sich besonders vorteilhaft um Optimalfilter. Optimalfilter helfen vorteilhafterweise das Signal-Rausch-Verhältnis zu optimieren. Somit eignen sich Optimalfilter optimal in der Verwendung von Lidarsystemen, die zumeist mit nur geringen Signal-Rausch-Abständen zu kämpfen haben.

Die Erfindung betrifft außerdem ein Verfahren zum Erfassen einer Umgebung, das die folgenden Schritte umfasst: Zunächst erfolgt ein Aussenden eines Laserlichts mittels einer Laserlichtquelle. Anschließend erfolgt ein Empfangen eines von der Umgebung reflektierten Laserlichts mittels einer Empfangsvorrichtung. Auf diese Weise ist insbesondere das zuvor ausgesandte und von der Umgebung reflektierte Laserlicht erfassbar. Dies erlaubt das Durchführen eines Entfernungsmessverfahrens basierend auf der Laufzeit des ausgesandten Lichts. Es ist vorgesehen, dass das Laserlicht in kontinuierlichen Laserstrahlen ausgesandt wird, sodass die Laserlichtquelle zum Aussenden eines kontinuierlichen Lichtstrahls angesteuert wird. Weiterhin ist vorgesehen, dass der ausgesandte kontinuierliche Lichtstrahl kontinuierlich moduliert wird, sodass der Lichtstrahl eine Vielzahl von aufeinanderfolgenden Codes umfasst. Somit ist ermöglicht, einen kontinuierlichen Lichtstrahl zum Erfassen der Umgebung zu verwenden, wobei gleichzeitig eine Entfernungsmessung durch Einlaufzeit ermöglicht ist.

### Kurze Beschreibung der Zeichnung(en)

Nachfolgend werden Ausführungsbeispiele der Erfindung unter Bezugnahme auf die begleitende Zeichnung im Detail beschrieben. In der Zeichnung ist:
Figur 1 eine schematische Ansicht eines Lidarsystems gemäß dem Stand der Technik,
Figur 2eine schematische Ansicht eines Lidarsystems gemäß einem Ausführungsbeispiel der Erfindung,
Figur 3eine schematische Abbildung einer ersten Alternative einer Empfangsvorrichtung des Lidarsystems gemäß dem Ausführungsbeispiel der Erfindung,
Figur 4eine schematische Abbildung unterschiedlicher Codes, die in dem Lidarsystem gemäß dem Ausführungsbeispiel der Erfindung verwendet werden,
Figur 5eine schematische Abbildung einer Signalverarbeitung durch die Empfangsvorrichtung gemäß der ersten Alternative,
Figur 6eine schematische Abbildung einer zweiten Alternative einer Empfangsvorrichtung des Lidarsystems gemäß dem Ausführungsbeispiel der Erfindung, und
Figur 7eine schematische Abbildung einer Signalverarbeitung durch die Empfangsvorrichtung gemäß der zweiten Alternative.

### Ausführungsform(en) der Erfindung

Figur 2 zeigt schematisch ein Lidarsystem 1 gemäß einem Ausführungsbeispiel der Erfindung. Das Lidarsystem 1 umfasst eine Laserlichtquelle 2, eine Empfangsvorrichtung 3 und eine Steuerungsvorrichtung 4. Dabei ist vorgesehen, dass durch die Laserlichtquelle 2 ein Laserlicht aussendbar ist. Das ausgesandte Laserlicht hat insbesondere die Form eines kontinuierlichen Lichtstrahls 5. Der kontinuierliche Lichtstrahl 5 ist insbesondere durch Ansteuern der Laserlichtquelle 2 durch die Steuerungsvorrichtung 4 generierbar. In Figur 2 sind verschiedene Positionen des kontinuierlichen Lichtstrahls 5 dargestellt, die analog zu dem in Figur 1 gezeigten Stand der Technik durch eine Ablenkvorrichtung 14 erzeugt werden können, um eine Scanbewegung 100 durchzuführen.

Der kontinuierliche Lichtstrahl 5 trifft auf die Umgebung 200 und wird von dieser reflektiert. Das reflektierte Laserlicht 9 ist von der Empfangsvorrichtung 3 detektierbar. Um anhand des reflektierten Laserlichts 9 eine Entfernungsmessung durchführen zu können, ist notwendig zu wissen, wann das reflektierte Laserlicht 9 ursprünglich von der Laserlichtquelle 2 ausgesandt wurde. Eine solche Information ist insbesondere aus Codes zu entnehmen. Dazu ist vorgesehen, dass die Steuerungsvorrichtung 4 eingerichtet ist, den ausgesandten Lichtstrahl 5 kontinuierlich zu modulieren, sodass der Lichtstrahl 5 eine Vielzahl von aufeinanderfolgenden Codes umfasst. Detektiert die Empfangsvorrichtung 3 reflektiertes Laserlicht 9, so ist diese außerdem eingerichtet, den Code des reflektierten Laserlichts 9 zu bestimmen. Anhand dieses Codes lässt sich ermitteln, wann das reflektierte Laserlicht 9 ursprünglich von der Laserlichtquelle 2 ausgesandt wurde. Auch ist erkennbar, ob das reflektierte Laserlicht 9 überhaupt von der Laserlichtquelle 2 ausgesandt wurde, sodass eine Störung des Lidarsystems 1 vermieden oder zumindest erschwert ist.

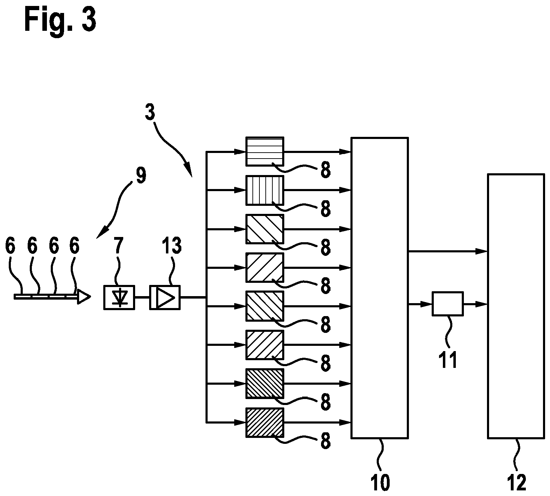

Die ausgesendete Codefolge kann durch die Steuerungsvorrichtung 4 vollständig kontrolliert werden. Insbesondere ist die Steuerungsvorrichtung 4 zum Aktivieren und Deaktivieren der Laserlichtquelle 2 eingerichtet, um es so besagte Codefolgen zu erzeugen. Im Gegensatz dazu ist nicht bekannt und auch nicht kontrollierbar, wie diese Codes von der Empfangsvorrichtung 3 empfangen werden. Das reflektierte Laserlicht 9 kann einzelne Codes, einzelne Codesegmente, oder auch eine Überlagerung verschiedener Codes umfassen. Um diese Codes dennoch zu identifizieren, umfasst die Empfangsvorrichtung 3 eine Vielzahl von Filter 8, wie in Figur 3 dargestellt ist. Figur 3 zeigt schematisch einen Aufbau einer ersten Alternative der Empfangsvorrichtung 3. Die Empfangsvorrichtung 3 umfasst eine Fotodiode, wobei die Fotodiode 7 auch ein Array von Fotodioden sein kann. Von der Fotodiode 7 ist das reflektierte Laserlicht 9 erfassbar, wobei das reflektierte Laserlicht 9 eine Vielzahl von Codes 6 aufweist. Die Fotodiode 7 ist außerdem eingerichtet, aus dem erfassten reflektierten Laserlichts 9 ein elektrisches Signal zu wandeln. Bei der Fotodiode 7 handelt es sich besonders vorteilhaft um eine SPAD-Diode. Der Fotodiode 7 ist ein Signal-Konditionierungselement 13 nachgeschaltet, durch das eine Vorbereitung des Signals von der Fotodiode 7 für eine nachfolgende Filterung ermöglicht ist. Insbesondere kann das Signal-Konditionierungselement 13 einen Signalverstärker aufweisen.

Weiterhin umfasst die Empfangsvorrichtung 3 in der in Figur 3 gezeigten ersten Alternative eine Vielzahl von Filter 8. Die Filter 8 sind insbesondere Optimalfilter. Dabei ist vorgesehen, dass jedem Filter 8 genau ein Code 6 zugeordnet ist, sodass für jeden Code 6, der von der Laserlichtquelle 2 generierbar ist, genau ein Filter 8 vorhanden ist. Dabei ist vorgesehen, dass jeder Filter 8 eine Korrelation des ihm zugeordneten Codes 6 mit dem von dem Signal-Konditionierungselement 13 übergebenen Signal vornimmt. Auf diese Weise gibt jeder Filter 8 ein maximales Ausgangssignal dann aus, wenn das Eingangssignal dem zugeordneten Code 6 entspricht. Andernfalls wird das Eingangssignal unterdrückt.

Den Filtern 8 nachgeschaltet ist eine Schwellwertentscheidungsschaltung 10. Die Schwellwertentscheidungsschaltung 10 dient zum entscheiden, ob ein Ausgangssignal von jedem der Filter 8 ausreicht, dass auf das Vorliegen des dem jeweiligen Filter 8 zugeordneten Codes 6 in dem erfassten Laserlicht 9 geschlossen werden kann. Sollte dies der Fall sein, so wird der erkannte Code 6 direkt an eine finale Rechenvorrichtung 12 übergeben. Ebenso erfolgt eine Zeitpunktbestimmung über ein Zeitmodul 11, sodass von dem Zeitmodul 11 der Rechenvorrichtung 12 der Zeitpunkt des Empfangens des erkannten Codes 6 übergebbar ist. Somit ist der Rechenvorrichtung 12 bekannt, welcher Code 6 wann durch die Empfangsvorrichtung 3 empfangen wurde. Da der Zeitpunkt des Aussendens der jeweiligen Codes 6 ebenfalls bekannt ist, lässt sich somit anhand der Laufzeit des Lichts, das den jeweiligen Code 6 aufweist, eine Entfernung desjenigen Hindernisses innerhalb der Umgebung 200 bestimmen, dass das Licht reflektiert hat.

Bevorzugt ist jeder Code 6 1,0 Mikrosekunden lang. Außerdem weist jeder Code 6 127 Bit auf. Da eine Korrelation innerhalb der Filter 8 stattfindet, ist vorgesehen, dass sich alle vorhandenen Code 6 möglichst unähnlich sind. Dies bedeutet, dass die Codes 6 eine maximale Orthogonalität und/oder eine minimale Kreuzkorrelation aufweisen. Gleichzeitig ist bevorzugt vorgesehen, dass eine Autokorrelation der Codes 6 zu einem scharfen Maximum mit niedrigen Nebenkeulen führt, also eine optimale Autokorrelation vorliegt. Die Codes 6 werden bevorzugt mittels N-Sequenz und/oder Golden Codes und/oder Kasami-Codes und/oder Barker-Codes und/oder Ipatov-Sequenzen bestimmt. Diese Verfahren sind grundsätzlich aus dem Stand der Technik bekannt und werden daher nicht näher erläutert.

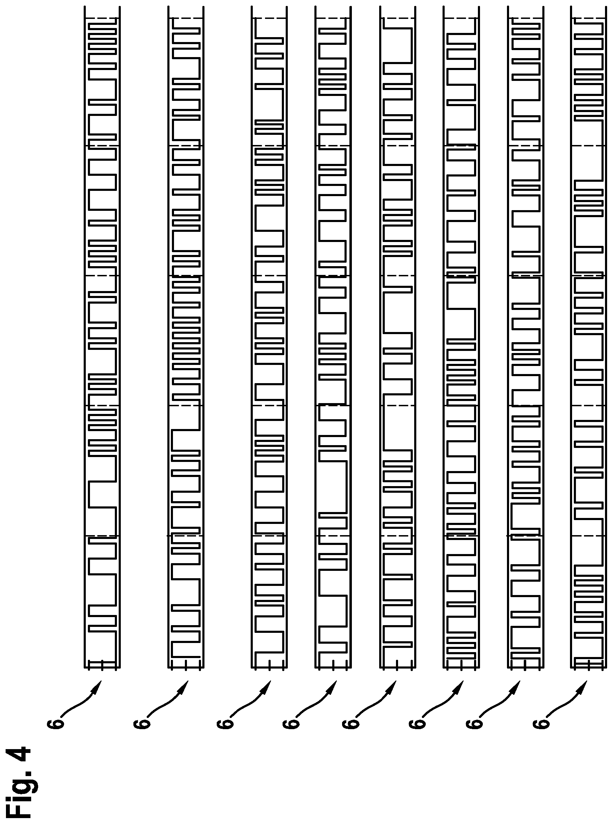

Figur 4 zeigt beispielhaft ein Set von acht verschiedenen Codes 6, die alle 127 Bit lang sind und mittels der Methode der Gold-Codes generiert wurden. Die in Figur 4 dargestellten acht Codes 6 werden bevorzugt unmittelbar aufeinanderfolgend und wiederholend innerhalb des kontinuierlichen Lichtstrahls 5 ausgesendet. Alternativ sind zwischen den einzelnen Codes 6 variable Pausen vorgesehen. Insbesondere ist vorteilhaft, dass durch Verlängern der Pausen mehr Zeit für eine elektronische Signalverarbeitung wie zuvor beschrieben zur Verfügung gestellt werden kann, während durch verkürzen der Pausen eine Genauigkeit der Entfernungsmessung erhöht werden kann.

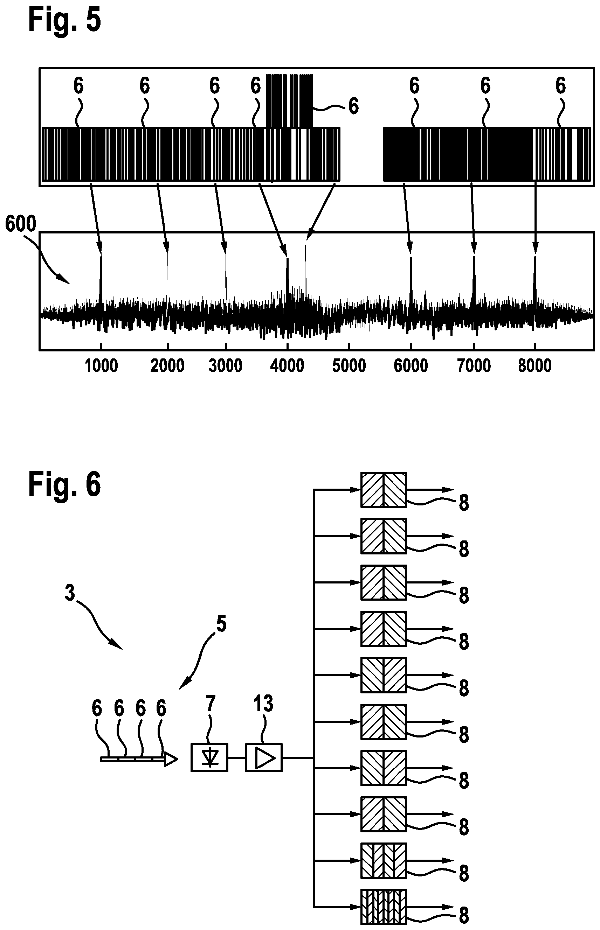

Wird der ausgesandten Lichtstrahl 5 kontinuierlich mit den in Figur 4 gezeigten Codes 6 moduliert, wird insbesondere eine Folge von acht unterschiedlichen Codes 6 ausgesandt, wobei sich diese Sequenz im Anschluss wiederholt. Werden diese acht Code 6 in der gleichen Reihenfolge von der Empfangsvorrichtung 3 erfasst, so befindet sich ein flaches äquidistantes Objekt in der Umgebung 200. In Figur 5 ist ein Fall gezeigt, in dem ein weiteres Hindernis vor besagtem Objekt vorhanden ist.

In Figur 5 ist schematisch gezeigt, wie die Codes 6 von der Empfangsvorrichtung 3 empfangen werden. Außerdem ist eine Überlagerung der Ausgangssignale 600 sämtlicher Filter 8 gezeigt. Aufgrund des Hindernisses erfolgt ein Erfassen des fünften ausgesandten Codes 6 gleichzeitig mit einem Erfassen des vierten ausgesandten Codes 6. Dies rührt daher, dass das Hindernis zu einer kürzeren Laufzeit desjenigen Teils des ausgesandten Lichtstrahls 5 führt, der auf das Hindernis trifft und somit früher als der verbleibende Lichtstrahl 5 reflektiert wird.

Es ist aus Figur 5 ersichtlich, dass zu einem ersten Zeitpunkt 1000 der erste ausgesandte Code 6 empfangen wird, da hier der zugehörige Filter 8 ein Maximum in seinem Ausgangssignal aufweist. Zu einem zweiten Zeitpunkt 2000 wird der zweite ausgesandte Code 6, zu einem dritten Zeitpunkt 3000 wird der dritte ausgesandte Code 6 und zu einem vierten Zeitpunkt 4000 wird der vierte ausgesandte Code 6 empfangen. Dabei ist vorgesehen, dass zwischen dem ersten Zeitpunkt 1000 und dem zweiten Zeitpunkt 2000, zwischen dem zweiten Zeitpunkt 2000 und dem dritten Zeitpunkt 3000 sowie dem dritten Zeitpunkt 3000 und dem vierten Zeitpunkt 4000 jeweils eine Mikrosekunde vergangen ist, was der Dauer genau eines Codes 6 entspricht.

Zu einem fünften Zeitpunkt 5000 wird allerdings kein Code 6 empfangen. Vielmehr wird kurz nach dem vierten Zeitpunkt 4000 ein weiterer Code 6 empfangen. Somit überschneiden sich der vierte ausgesandte Code 6 und der fünfte ausgesandte Code 6, was jedoch durch die Filter 8 erkennbar ist. Zu einem sechsten Zeitpunkt 6000, zu einem siebten Zeitpunkt 7000 und zu einem achten Zeitpunkt 8000 werden wiederum der jeweils ausgesandte sechste Code 6, der siebte Code 6 und der achte Code 6 ohne Überlagerung empfangen. Die Rechenvorrichtung 12 kann somit bestimmen, dass sich ein näheres Hindernis vor einem weiter entfernten Hindernis befindet. Anhand der in Bewegung 100 ist außerdem die Position des näheren Hindernisses, das zu der verfrühten Detektion des Teils des fünften ausgesandten Codes 6 geführt hat, ermittelbar.

Prinzipiell kann auf diese Weise auch eine Differenzgeschwindigkeit zwischen dem Lidarsystem 1 und einem erkannten Hindernis bestimmt werden. Da die Codedauer des ausgesandten Codes 6 bekannt ist, insbesondere 1,0 Mikrosekunden beträgt, lässt sich aus einer Verlängerung oder Verkürzung des von der Empfangsvorrichtung 3 empfangenen Codes 6 besagte Differenzgeschwindigkeit bestimmen. Wird beispielsweise erkannt, dass die Codedauer eines empfangenen Codes 6 um 0,66 Pikosekunden verlängert ist, so kann unter Zugrundelegung der Vakuum-Lichtgeschwindigkeit darauf geschlossen werden, dass sich das erkannte Hindernis mit einer Geschwindigkeit von 100 Meter pro Sekunde von dem Lidarsystem 1 entfernt, wenn eine Codedauer des ausgesandten Codes 6 1,0 Mikrosekunden betragen hat.

Außerdem lässt sich bevorzugt ein Neigungswinkel des erfassten Hindernisses bestimmen. Wird über die Scanbewegung 100 der ausgesandte Lichtstrahl 5 über eine geneigte Fläche geschwenkt, so ergibt sich analog zu dem oben genannten Fall der Relativgeschwindigkeit wiederum eine Verlängerung oder Verkürzung der Codedauer des empfangenen Codes 6. Wird beispielsweise ein Code 6 mit einer Codedauer von 1,0 Mikrosekunden ausgesandt und eine Verzögerung oder Verkürzung der Codedauer des empfangenen Codes 6 von 3,3 Nanosekunden festgestellt, so ist wiederum bei Zugrundelegung der Vakuum-Lichtgeschwindigkeit auf eine Neigung von 45 Grad zu schließen, wenn durch die Scanbewegung 100 während der Codedauer von 1,0 Mikrosekunden ein Bereich von 50 Zentimetern Länge überstrichen wird.

Figur 6 zeigt schematisch eine zweite Alternative der Empfangsvorrichtung 3 des Lidarsystems 1 gemäß dem Ausführungsbeispiel der Erfindung. In der zweiten Alternative geprüft jeder Filter 8 nicht auf einen einzigen Code 6, sondern auf eine Folge von verschiedenen Codes 6. So sind Filter 8 vorhanden, die auf eine Folge von zwei verschiedenen Codes 6 oder auf eine Folge von vier verschiedenen Codes 6 oder auf eine Folge von acht verschiedenen Codes 6 überprüfen. Ansonsten ist der Aufbau der Empfangsvorrichtung 3 identisch zu Figur 6, so das auf die Darstellung der Schwellwertentscheidungsschaltung 10, des Zeitmoduls 11 und der Rechenvorrichtung 12 verzichtet ist. Besonders vorteilhaft lassen sich die in Figur 3 gezeigten Filter 8 und die in Figur 6 gezeigten Filter 8 in Reihe schalten.

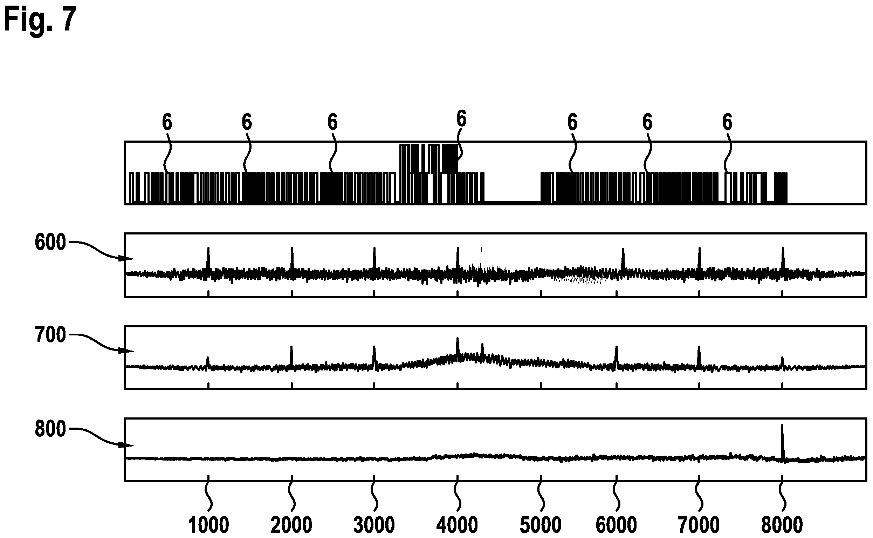

Figur 7 zeigt schematisch dasselbe wie Figur 5, wobei zusätzlich die Ausgangssignale 700, 800 eines Teils der Filter 8 aus Figur 6 dargestellt sind. Die ersten Ausgangssignale 600 der Filter 8 aus Figur 3 entsprechen somit den Ausgangssignalen von Filtern 8, denen lediglich ein einziger Code 6 zugeordnet ist. Die zweiten Ausgangssignale 700 entsprechen den Ausgangssignalen solcher Filter 8, dienen 2 Codes 6 zugeordnet sind. Derartige Filter 8 sind in Figur 6 gezeigt, insbesondere durch die obersten acht Filter 8. Schließlich zeigt das dritte Ausgangssignal 800 das Ausgangssignal eines Filters 8, dem acht Code 6 zugeordnet sind. Ein solcher Filter 8 ist in Figur 6 an unterster Stelle gezeigt.

Aus Figur 7 ist ersichtlich, dass ein Signal-Rausch-Verhältnis mit höherer Anzahl von zugeordneten Codes 6 verbessert wird. Gleichzeitig ist eine Auflösung verringert. Werden somit die in Figur 6 und Figur 3 gezeigten Filter 8 allesamt parallel geschaltet, so kann zunächst anhand von grobkörnigen Filtern 8, das bedeutet anhand von Filtern 8, denen mehrere Codes 6 zugeordnet sind, versucht werden, ein sicheres Signal aufzuzeichnen. Im Nachgang kann mit feinkörnigeren Filtern 8, das bedeutet mit Filtern 8 denen weniger Codes 6 oder nur ein Code 6 zugeordnet sind, versucht werden, eine hohe Genauigkeit zu erzielen.

Somit ist ersichtlich, dass das Lidarsystem 1 gemäß dem Ausführungsbeispiel der Erfindung einerseits eine hohe Zuverlässigkeit und Genauigkeit bei der Entfernungsmessung bietet, andererseits von externen Quellen nur schwierig oder gar nicht gestört werden kann. Dabei wird gänzlich auf die Verwendung gepulste Laser verzichtet.

## Patentansprüche

1. Lidarsystem (1) zum Erfassen einer Umgebung (200) umfassend
• eine Laserlichtquelle (2) zum Aussenden eines Laserlichts,
• eine Empfangsvorrichtung (3) zum Empfangen eines von der Umgebung (200) reflektierten Laserlichts (9), und
• eine Steuerungsvorrichtung (4) zum Ansteuern der Laserlichtquelle (2), **dadurch gekennzeichnet, dass**
• die Steuerungsvorrichtung (4) eingerichtet ist, die Laserlichtquelle (2) zum Aussenden eines kontinuierlichen Lichtstrahls (5) anzusteuern und den ausgesandten Lichtstrahl (5) kontinuierlich zu modulieren, sodass der Lichtstrahl (5) eine Vielzahl von aufeinanderfolgenden Codes (6) umfasst, derart, dass eine zeitliche Zuordnung des Lichtstrahls (5) ermöglicht ist.

2. Lidarsystem (1) nach Anspruch 1, **dadurch gekennzeichnet, dass** die Codes (6) eine minimale Kreuzkorrelation und/oder eine maximale Orthogonalität aufweisen.

3. Lidarsystem (1) nach einem der vorhergehenden Ansprüche, **dadurch gekennzeichnet, dass** die Laserlichtquelle (2) zum Aussenden des Laserlichts zumindest entlang eines zweidimensionalen Raumes ausgebildet ist, um eine Scan-Bewegung des Laserlichts auszuführen.

4. Lidarsystem (1) nach einem der vorhergehenden Ansprüche, **dadurch gekennzeichnet, dass** die Codes (6) durch unterschiedliche Folgen eines Aktivierens und Deaktivierens der Laserlichtquelle (2) generiert werden.

5. Lidarsystem (1) nach einem der vorhergehenden Ansprüche, **dadurch gekennzeichnet, dass** die Codes (6) eine Zeitdauer zwischen 0,5 Mikrosekunden und 1,5 Mikrosekunden, insbesondere 1,0 Mikrosekunden, und/oder eine Länge von 127 Bit aufweisen.

6. Lidarsystem (1) nach einem der vorhergehenden Ansprüche, **dadurch gekennzeichnet, dass** die Codes (6) mittels N-Sequenz und/oder Golden Codes und/oder Kasami-Codes und/oder Barker-Codes und/oder Ipatov-Sequenzen bestimmt werden.

7. Lidarsystem (1) nach einem der vorhergehenden Ansprüche, **dadurch gekennzeichnet, dass** die Empfangsvorrichtung (3) zumindest eine Fotodiode und/oder ein Fotodiodenarray (7) umfasst.

8. Lidarsystem (1) nach Anspruch 7, **dadurch gekennzeichnet, dass** die Fotodiode und/oder der Fotodiodenarray (7) eine pin-Diode und/oder eine APD-Diode und/oder eine SPAD-Diode umfasst.

9. Lidarsystem (1) nach einem der vorhergehenden Ansprüche, **dadurch gekennzeichnet, dass** die Empfangsvorrichtung (3) einen Filter (8) für jeden Code (6) umfasst.

10. Lidarsystem (1) nach Anspruch 9, **dadurch gekennzeichnet, dass** die Filter (8) Optimalfilter umfassen.

11. Verfahren zum Erfassen einer Umgebung (200), umfassend die Schritte
• Aussenden eines Laserlichts mittels einer Laserlichtquelle (2), und
• Empfangen eines von der Umgebung (200) reflektierten Laserlichts (9) mittels einer Empfangsvorrichtung (3), und
• Ansteuern der Laserlichtquelle (2) zum Aussenden eines kontinuierlichen Lichtstrahls (5),
**dadurch gekennzeichnet, dass**
• der ausgesandte kontinuierliche Lichtstrahl (5) kontinuierlich moduliert wird, sodass der Lichtstrahl (5) eine Vielzahl von aufeinanderfolgenden Codes (6) umfasst, derart, dass eine zeitliche Zuordnung des Lichtstrahls (5) ermöglicht ist.

## Claims

1. Lidar system (1) for detecting surroundings (200), comprising
• a laser light source (2) for emitting a laser light,
• a receiving apparatus (3) for receiving a laser light (9) reflected from the surroundings (200), and
• a control apparatus (4) for controlling the laser light source (2),
**characterized in that**
• the control apparatus (4) is configured to control the laser light source (2) to emit a continuous beam of light (5) and to continuously modulate the emitted beam of light (5), as a result of which the beam of light (5) comprises a multiplicity of successive codes (6), in such a way that time association of the beam of light (5) is facilitated.

2. Lidar system (1) according to Claim 1, **characterized in that** the codes (6) have a minimum cross-correlation and/or a maximum orthogonality.

3. Lidar system (1) according to either of the preceding claims, **characterized in that** the laser light source (2) is designed to emit the laser light along at least one two-dimensional space in order to carry out a scan movement for the laser light.

4. Lidar system (1) according to one of the preceding claims, **characterized in that** the codes (6) are generated by different sequences of activation and deactivation of the laser light source (2).

5. Lidar system (1) according to one of the preceding claims, **characterized in that** the codes (6) have a duration of between 0.5 microsecond and 1.5 microseconds, in particular 1.0 microsecond, and/or a length of 127 bits.

6. Lidar system (1) according to one of the preceding claims, **characterized in that** the codes (6) are determined by means of N-sequence and/or Golden codes and/or Kasami codes and/or Barker codes and/or Ipatov sequences.

7. Lidar system (1) according to one of the preceding claims, **characterized in that** the receiving apparatus (3) comprises at least one photodiode and/or a photodiode array (7).

8. Lidar system (1) according to Claim 7, **characterized in that** the photodiode and/or the photodiode array (7) comprises a PIN diode and/or an APD diode and/or an SPAD diode.

9. Lidar system (1) according to one of the preceding claims, **characterized in that** the receiving apparatus (3) comprises a filter (8) for each code (6).

10. Lidar system (1) according to Claim 9, **characterized in that** the filters (8) comprise matched filters.

11. Method for detecting surroundings (200), comprising the steps of
• emitting a laser light by means of a laser light source (2), and
• receiving a laser light (9) reflected from the surroundings (200) by means of a receiving apparatus (3), and
• controlling the laser light source (2) to emit a continuous beam of light (5),
**characterized in that**
• the emitted continuous beam of light (5) is continuously modulated, as a result of which the beam of light (5) comprises a multiplicity of successive codes (6), in such a way that time association of the beam of light (5) is facilitated.

## Revendications

1. Système lidar (1) destiné à détecter un environnement (200), comprenant
• une source de lumière laser (2) destinée à émettre une lumière laser,
• un dispositif de réception (3) destiné à recevoir une lumière laser (9) réfléchie par l'environnement (200), et
• un dispositif de commande (4) destiné à commander la source de lumière laser (2),
**caractérisé en ce que**
• le dispositif de commande (4) est conçu pour commander la source de lumière laser (2) afin qu'elle émette un faisceau de lumière (5) continu, et pour moduler en continu le faisceau de lumière (5) émis de manière à ce que le faisceau de lumière (5) comprenne une pluralité de codes (6) successifs, de telle sorte qu'une affectation temporelle du faisceau de lumière (5) soit possible.

2. Système lidar (1) selon la revendication 1, **caractérisé en ce que** les codes (6) présentent une intercorrélation minimale et/ou une orthogonalité maximale.

3. Système lidar (1) selon l'une des revendications précédentes, **caractérisé en ce que** la source de lumière laser (2) est conçue pour émettre la lumière laser au moins le long d'un espace bidimensionnel afin d'effectuer un mouvement de balayage de la lumière laser.

4. Système lidar (1) selon l'une des revendications précédentes, **caractérisé en ce que** les codes (6) sont générés par différentes séquences d'une activation et d'une désactivation de la source de lumière laser (2).

5. Système lidar (1) selon l'une des revendications précédentes, **caractérisé en ce que** les codes (6) présentent une durée comprise entre 0,5 microseconde et 1,5 microsecondes, notamment 1,0 microseconde, et/ou une longueur de 127 bits.

6. Système lidar (1) selon l'une des revendications précédentes, **caractérisé en ce que** les codes (6) sont déterminés au moyen de codes à séquence N et/ou d'or et/ou de codes de Kasami et/ou de codes de Barker et/ou de séquences d'Ipatov.

7. Système lidar (1) selon l'une des revendications précédentes, **caractérisé en ce que** le dispositif de réception (3) comprend au moins une photodiode et/ou un réseau de photodiodes (7).

8. Système lidar (1) selon la revendication 7, **caractérisé en ce que** la photodiode et/ou le réseau de photodiodes (7) comprend une diode pin et/ou une diode APD et/ou une diode SPAD.

9. Système lidar (1) selon l'une des revendications précédentes, **caractérisé en ce que** le dispositif de réception (3) comprend un filtre (8) pour chaque code (6) .

10. Système lidar (1) selon la revendication 9, **caractérisé en ce que** les filtres (8) comprennent des filtres optimaux.

11. Procédé de détection d'un environnement (200), comprenant les étapes consistant à
• émettre une lumière laser au moyen d'une source de lumière laser (2), et
• recevoir une lumière laser (9) réfléchie par l'environnement (200) au moyen d'un dispositif de réception (3), et
• commander la source de lumière laser (2) afin qu'elle émette un faisceau de lumière (5) continu,
**caractérisé en ce que**
• le faisceau de lumière (5) continu émis est modulé en continu, de manière à ce que le faisceau de lumière (5) comprenne une pluralité de codes (6) successifs, de telle sorte qu'une affectation temporelle du faisceau de lumière (5) soit possible.
